# DEMANDE DE BREVET EUROPEEN

(11) **EP 0 607 095 A1**
(43) Date de publication de la demande: **20.07.1994**
(21) Numéro de dépôt: 94420004.7
(22) Date de dépôt: 07.01.1994
(51) Int. Cl.: B62M 9/10

(54) **Ensemble de jeu de pignons à chaîre pour bicyclette**

(30) Priorité: 14.01.1993 FR 9300490
(71) Demandeur: B.G. INNOVATION (S.A.R.L.), F-74000 Annecy (FR)
(72) Inventeur: Lacombe, Jean-Pierre, F-74650 Chavanod (FR); Mercat, Jean-Pierre, F-01990 Channeins (FR)
(74) Mandataire: Lejeune, Benoit

(57) **Abrégé**

Roue libre pour cycle comprenant un empilage de plusieurs pignons (8a, 8b, 8c, 8d, 8e, 8f, 8g, 8h) séparés les uns des autres par des entretoises (9a, 9b, 9c, 9d, 9e, 9f, 9g), ledit empilage étant maintenu sur le manchon (13) d'un corps de roue libre entre un élément d'appui (11) et un élément de retenue (12), caractérisée en ce que ledit élément de retenue (12) est en butée contre un appui disposé sur une pièce d'appui (13) pour déterminer entre ledit élément d'appui (11) et l'élément de retenue (12), une distance (D) déterminée, tandis que chaque entretoise (9a, 9b, 9c, 9d, 9e, 9f, 9g) est une rondelle déformable élastiquement dans son épaisseur.

## Description

La présente invention concerne une roue libre pour cycles, et plus particulièrement un perfectionnement apporté au montage des différents pignons sur celle-ci.

Les roues arrière de cycles sont équipées d'un moyeu sur lequel est rapporté extérieurement un dispositif de roue libre comprenant un empilage de pignons de différents diamètres et destinés à coopérer, de manière sélective, avec la chaîne de transmission dont le déplacement latéral pour passer d'un pignon à l'autre, est commandé par un dérailleur. Traditionnellement, les différents pignons sont empilés sur la roue libre et séparés les uns des autres par des entretoises. L'empilage étant retenu longitudinalement grâce à un écrou vissé sur le manchon de ladite roue libre. Ledit écrou servant généralement de pignon extrême terminant la série. Ce type de disposition est par exemple décrit dans les demandes de brevet français n° 2 573 834 et 2 588 236. Ce type de disposition, bien que déjà perfectionné, présente néanmoins un certain nombre d'inconvénients, et notamment celui de ne permettre ni un espacement régulier entre les différents pignons, ni une distance définie entre les deux pignons d'extrémité, ce qui provoque une certaine imprécision dans l'alignement de la chaîne. Certains constructeurs ont donc été amenés à usiner par rectification, les faces des pignons pour leur donner une épaisseur précise déterminée, ce qui entraîne un coût de fabrication excessif. Par ailleurs, il n'en demeure pas moins que la position de l'écrou final de serrage reste indéfinie, compte-tenu de l'imprécision des épaisseurs des entretoises et de l'effort de serrage donné audit écrou.

La présente invention a pour objet de résoudre les inconvénients évoqués précédemment, en proposant une roue libre dont l'espacement entre les pignons est une distance déterminée constante.

Ainsi, la roue libre pour cycle selon l'invention comprenant un empilage de plusieurs pignons séparés les uns des autres par des entretoises,et maintenus sur le manchon d'un corps de roue libre entre un élément d'appui et un élément de retenue, est caractérisée en ce que ledit élément de retenue est en butée contre un appui disposé sur une pièce d'appui pour déterminer entre ledit élément d'appui et l'élément de retenue, une distance déterminée.

Selon une caractéristique complémentaire, chaque entretoise est une rondelle déformable élastiquement dans son épaisseur.

Selon l'un des modes d'exécution, chaque entretoise est une rondelle réalisée en matériau plastique. Selon une des dispositions, les deux faces diamétrales de la rondelle comprennent chacune une succession de profils en saillie, la succession des saillies de la première face étant décalée par rapport à la succession des saillies de la deuxième face.

Selon une autre caractéristique complémentaire, la pièce d'appui comprend une paroi cylindrique. Dans un mode préféré de l'invention, la pièce d'appui est constituée par le manchon lui-même.

Dans un mode d'exécution, l'élément de retenue est une douille externe vissée à l'intérieur du manchon, laquelle comprend une paroi diamétrale dont la face d'appui est en butée contre un appui constitué par la face transversale d'extrémité dudit manchon.

Dans un autre mode de réalisation, la douille externe est en butée sur un rebord d'appui interne dudit manchon.

Selon une autre disposition, la pièce d'appui est une pièce indépendante, et l'élément de retenue est en butée contre sa face d'extrémité.

Dans une variante, l'élément d'appui est solidaire du manchon et fait partie intégrante de celui-ci, tandis que dans une autre variante, il est une douille externe vissée à l'intérieur du manchon.

Ainsi, la distance entre ledit élément d'appui et ledit élément de retenue est définie par la longueur entre deux appuis d'une pièce d'appui.

D'autres caractéristiques et avantages de l'invention se dégageront de la description qui va suivre en regard des dessins annexés qui ne sont donnés qu'à titre d'exemples non limitatifs.

La figure 1 est une vue latérale avec coupe partielle du moyeu selon l'invention.

Les figures 2 et 3 sont des vues illustrant des détails de construction du manchon de la roue libre avec les deux éléments d'extrémité, la figure 2 montrant les différentes pièces le composant en position démontée, tandis que la figure 3 représente le manchon en position montée avec les deux éléments d'extrémité.

La figure 4 est une vue en bout du manchon.

La figure 5 est une vue illustrant l'un des pignons.

La figure 6 est une vue en coupe montrant l'empilage des pignons avec les entretoises, avant leur compression.

La figure 7 est une vue en coupe montrant le même empilage en position finale comprimée.

Les figures 8, 9, 10 et 11 illustrent un premier mode d'exécution des entretoises.

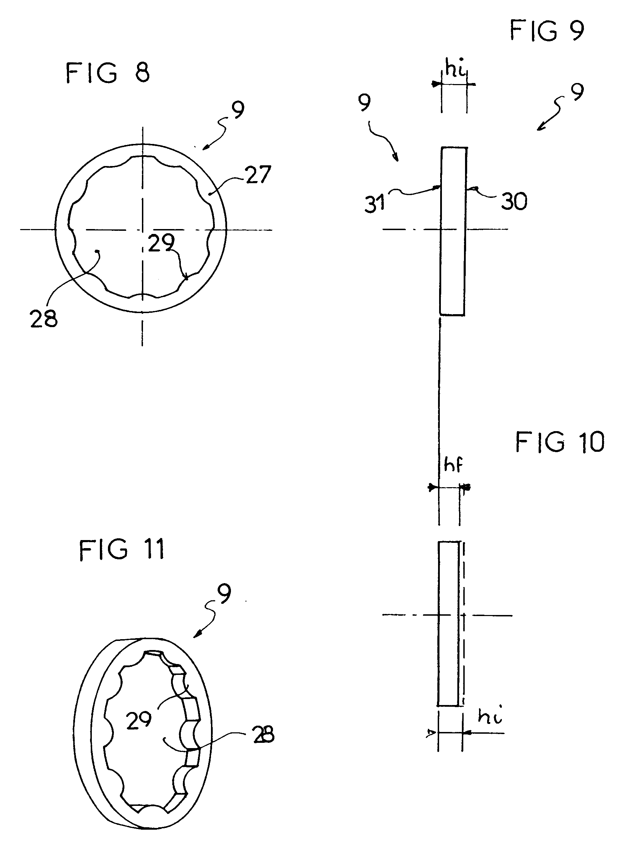

La figure 8 est une vue en bout d'une entretoise.

La figure 9 est une vue latérale en position de repos d'une entretoise.

La figure 10 est une vue latérale en position comprimée d'une entretoise.

La figure 11 est une perspective de l'entretoise des figures 8, 9 et 10.

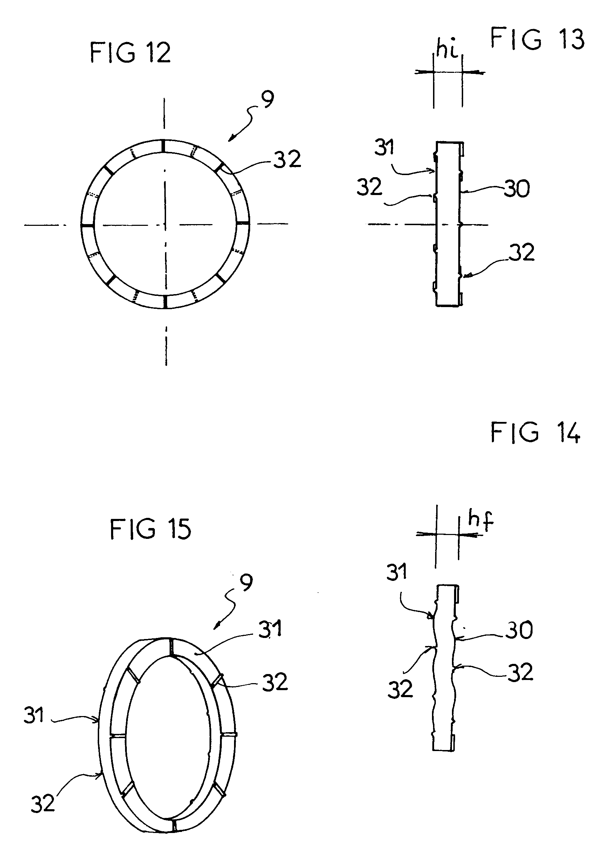

Les figures 12, 13, 14 et 15 illustrent un deuxième mode d'exécution des entretoises.

La figure 12 est une vue en bout d'une entretoise.

La figure 13 est une vue latérale en position de repos d'une entretoise.

La figure 14 est une vue latérale en position comprimée d'une entretoise.

La figure 15 est une perspective de l'entretoise des figures 12, 13 et 14.

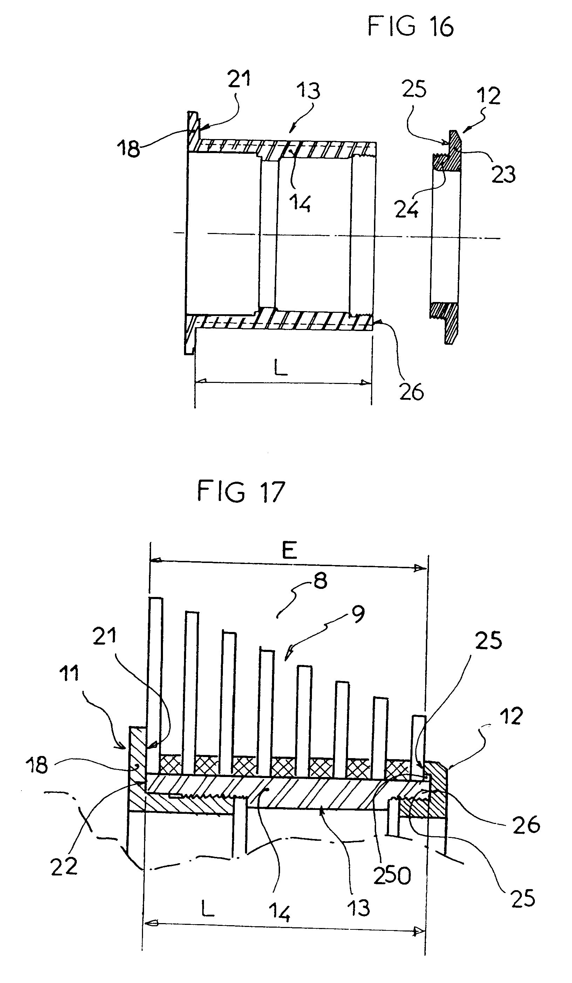

Les figures 16 et 17 illustrent des variantes de réalisation.

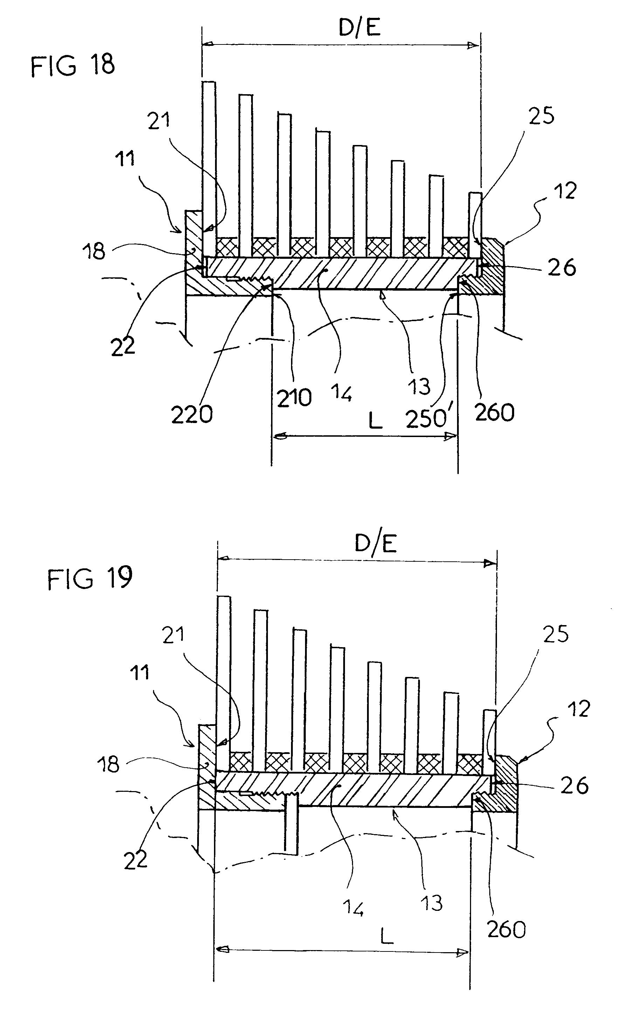

Les figures 18 à 20 sont des vues similaires à la figure 17, illustrant des variantes d'exécution.

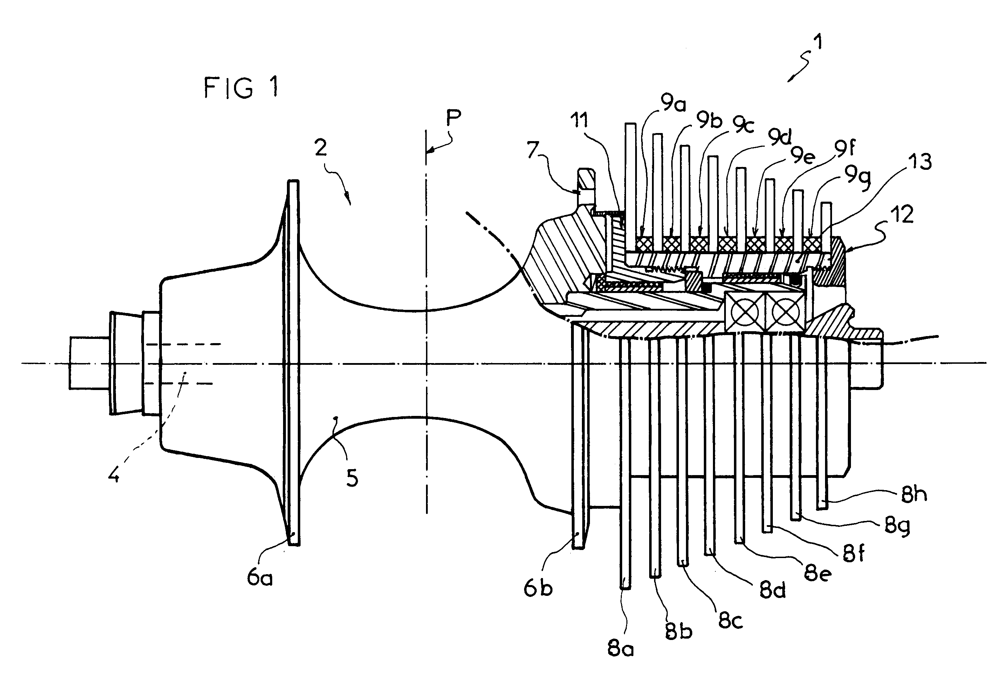

La figure 1 illustre un moyeu de roue libre portant la référence générale (1). Il est constitué par un moyeu de roue (2) entraîné par la roue libre (3). L'entraînement se faisant de façon connue en soi, par l'intermédiaire d'un dispositif du type à cliquet ou piston. Ledit moyeu de roue (2) ainsi que la roue libre (3) étant montés en rotation autour d'un axe (4) dont les extrémités sont fixées aux extrémités de la fourche arrière du cycle. Le corps de moyeu (5) est solidaire de deux flasques (6a, 6b) munis de trous (7) destinés à recevoir les rayons de la roue le reliant à la jante. Le moyeu de roue libre comprend un empilage de plusieurs pignons (8) séparés les uns des autres par des entretoises (9). Ledit empilage desdits pignons (8) avec lesdites entretoises de séparation (9) étant monté sur le corps de roue libre (13) pour y être retenu en appui mutuel entre un élément d'appui (11) et un élément de retenue (12).

Dans le mode de réalisation donné à titre d'exemple, le moyeu comprend huit pignons (8a, 8b, 8c, 8d, 8e, 8f, 8g, 8h) séparés par sept entretoises (9a, 9b, 9c, 9d, 9e, 9f, 9g). Ainsi, une première entretoise (9a) sépare le premier (8a) et le deuxième (8b) pignon. De même, une deuxième entretoise (9b) sépare le deuxième (8b) et le troisième (8c) pignon, tandis qu'une troisième entretoise (9c) sépare le troisième (8c) et le quatrième (8d) pignon, et une quatrième entretoise (9d) sépare ledit quatrième (8d) du cinquième (8e) pignon, et ainsi de suite.

Le corps de roue libre est constitué par un manchon (13) dont la paroi cylindrique (14) comprend extérieurement une succession de cannelures longitudinales (15) espacées régulièrement et destinées à coopérer avec des dents (16) faisant saillie à l'intérieur du trou central (17) des différents pignons. La coopération des dents (16) avec les cannelures (15) assurant ainsi l'immobilisation relative en rotation entre chaque pignon (8) et le manchon (13), permettant ainsi l'entraînement en rotation du corps de roue libre quand l'un des pignons est actionné par la chaîne. Les différents pignons sont bien entendu de diamètre progressivement de plus en plus petit au fur et à mesure que l'on s'éloigne du plan (P) de symétrie générale du cycle. Ainsi, le premier pignon (8a) a par exemple 21 dents; le deuxième pignon (8b), 19 dents; le troisième pignon (8c), 18 dents; le quatrième pignon (8d), 17 dents; le cinquième pignon (8e), 16 dents; le sixième pignon (8f), 15 dents; le septième pignon (8g), 14 dents; et le huitième pignon (8h) a par exemple 13 dents.

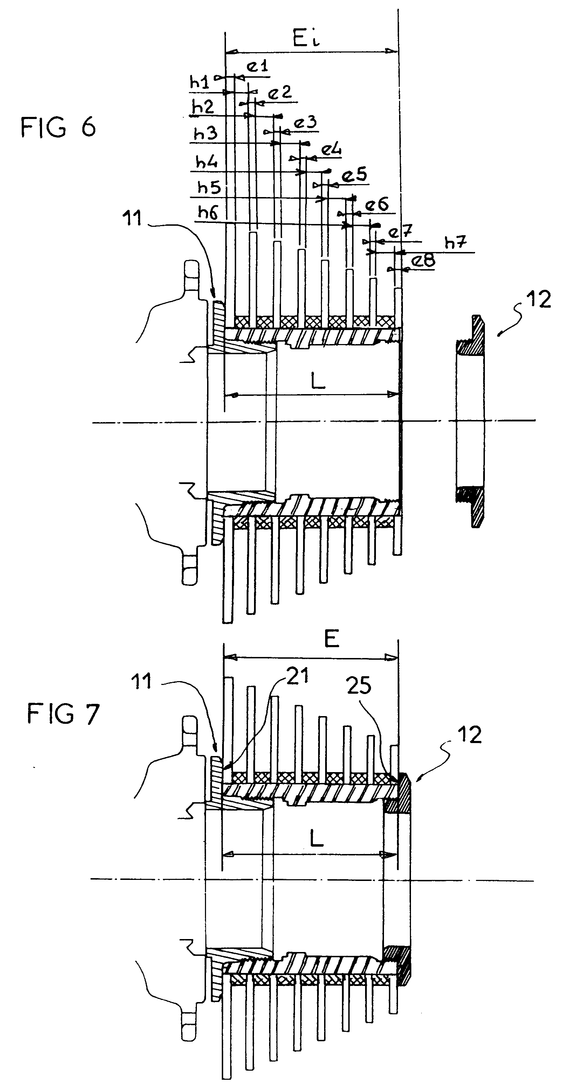

Selon l'invention, la longueur (L) du manchon (13) définit l'épaisseur (E) occupée par l'empilage en position montée de retenue, comme celle illustrée à la figure 7. Dans cette position, l'empilage (8, 9) est, comme nous l'avons dit précédemment, retenu entre deux éléments. Ainsi, l'ensemble des pignons (8) et des entretoises (9) est retenu comprimé longitudinalement entre un premier élément ou élément d'appui (11) et un deuxième élément de compression ou élément de retenue (12). L'élément d'appui (11) est constitué par une douille interne qui comprend une paroi cylindrique (20) vissée à l'intérieur du manchon, et une paroi diamétrale (18) formant une collerette contre laquelle le premier des pignons (8a) est en appui.

La douille interne (11) est vissée dans le manchon jusqu'à ce que la face d'appui (21) de la paroi diamétrale (18) soit en appui contre la face transversale d'extrémité interne (22) dudit manchon (13). Il va de soi que la paroi diamétrale d'appui (18) et le manchon (13) pourraient être une seule et même pièce, comme cela est réalisé à la figure 16.

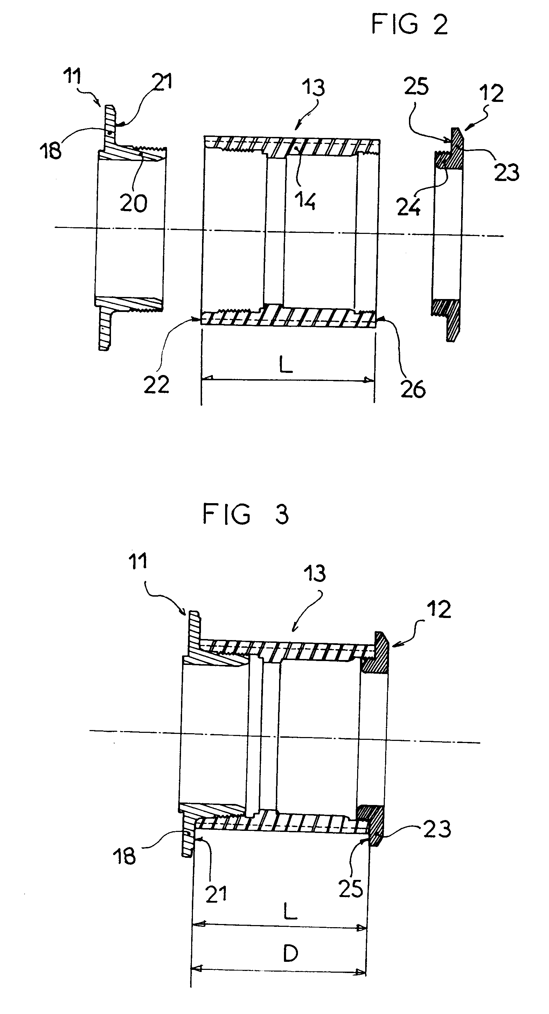

L'élément de retenue (12) est constitué par une douille externe qui comprend une paroi cylindrique (24) vissée à l'intérieur de l'extrémité externe du manchon (13), ladite paroi cylindrique étant prolongée diamétralement par la paroi diamétrale (23) formant une collerette d'appui pour le dernier pignon (8h). Ladite douille externe (12) est vissée dans le manchon (13) jusqu'à ce que la face d'appui (25) de la paroi diamétrale (23) soit en appui contre la face transversale d'extrémité externe (26) dudit manchon (13), pour définir entre la face d'appui (21) de la douille interne (11) et la face d'appui (25) de la douille externe (12), une distance (D) strictement égale à la longueur (L) du manchon (figure 3).

La figure 6 illustre l'empilage des pignons (8a, 8b, 8c, 8d, 8e, 8f, 8g, 8h) avec les entretoises correspondantes (9a, 9b, 9c, 9d, 9e, 9f, 9g) dans une position de repos, non contrainte par la douille de retenue (12). Dans cette position, c'est-à-dire juste empilés et mis en contact l'un avec l'autre, on constate que l'épaisseur totale initiale (Ei) de l'empilage est égale à la somme des épaisseurs (e1, e2, e3, e4, e5, e6, e7, e8) des pignons et à la somme des épaisseurs initiales (h1, h2, h3, h4, h5, h6, h7) des entretoises.

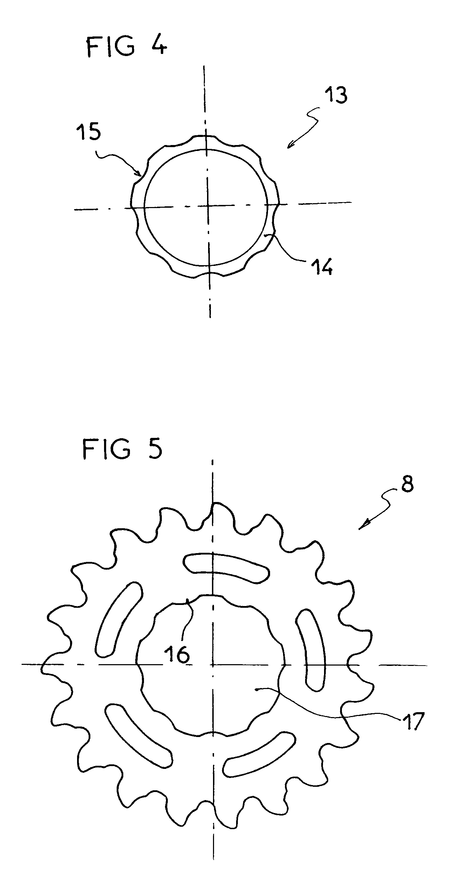

Selon l'invention, chaque entretoise est déformable élastiquement, au moins dans leur épaisseur, pour pouvoir être comprimée lors de la mise en place de la douille externe (12) et jusqu'à ce que sa face d'appui (25) vienne en contact avec la face transversale d'extrémité externe (26) du manchon (13), et ce, afin que l'empilage des pignons ait une largeur (E) définie et égale à la distance entre les faces d'appui (21, 25) de la douille interne (11) et de la douille externe (12). Cette distance étant égale à la longueur (L) du manchon dans le mode de réalisation illustré aux figures 1 à 7. Il va de soi que la largeur (E) peut être différente de la longueur (L) du manchon (13). C'est par exemple le cas dans la réalisation de la figure 17 où la largeur (E) est inférieure à la longueur (L). La paroi diamétrale (23) comprend une gorge circulaire d'appui (250).

Les entretoises (9a, 9b, 9c, 9d, 9e, 9f, 9g) ont la forme d'une bague circulaire dont la paroi périphérique (27) forme un trou central (28) comprenant des dents successives (29) destinées à coopérer avec les cannelures (15) du manchon (13). Dans un premier mode de réalisation des entretoises, telles qu'illustrées aux figures 8 à 11, les entretoises sont réalisées en matériau plastique, pour pouvoir être comprimées par exemple d'une épaisseur initiale (hi) de 3,2 millimètres à une épaisseur finale (hf) de 3,05 millimètres. Les entretoises sont par exemple en élastomère et sont réalisées par injection.

Les figures 12 à 15 illustrent une variante de réalisation des entretoises selon laquelle leur configuration géométrique leur permet d'être déformables élastiquement dans leur épaisseur. A cet effet, chaque face diamétrale (30, 31) comprend une succession de saillies radiales (32). Ainsi, la première face diamétrale (30) comprend une première succession de huit saillies (32a, 32b, 32c, 32d, 32e, 32f, 32g, 32h) réparties uniformément, tandis que la deuxième face diamétrale (31) comprend une deuxième succession de huit autres saillies (32i, 32j, 32k, 32l, 32m, 32n, 320, 32p) réparties uniformément, mais décalées par rapport aux saillies de la première face. Grâce au décalage des saillies, on comprend aisément que l'épaisseur initiale (hi) peut varier pour passer à une épaisseur finale (hf) inférieure à (hi).

La figure 18 est une vue similaire à la figure 17, illustrant une variante selon laquelle la longueur (L) définissant la distance (D) est définie non pas par les faces transversales d'extrémité (22, 26) du manchon (13), mais par des rebords d'appui interne (220, 260).

La figure 19 est une autre variante selon laquelle les appuis sont mixtes, à savoir que l'élément d'appui (11) est en appui sur la face transversale (22) du manchon, tandis que l'élément de retenue (12) est en appui sur un rebord d'appui interne (260).

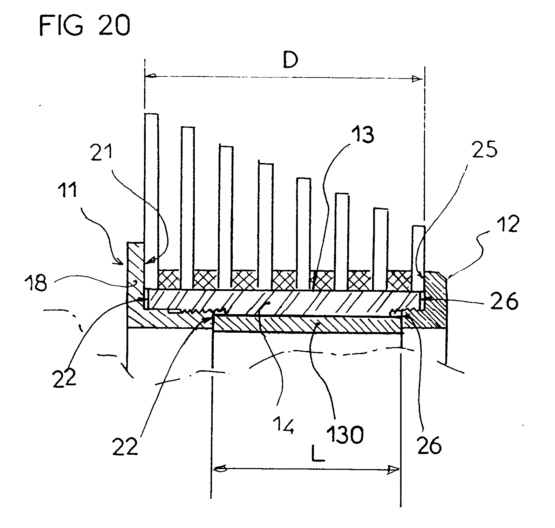

La figure 20 illustre un autre mode d'exécution selon lequel la distance (D) entre l'élément d'appui (11) et l'élément de retenue (12) n'est pas définie par la longueur (L) du manchon (13), mais par la longueur (L) d'une pièce d'appui (130) qui comprend avantageusement une paroi cylindrique (140). Dans ce mode d'exécution, l'élément d'appui (11) est en butée sur la face d'extrémité (221) de ladite pièce d'appui, alors que l'élément de retenue (12) est en butée sur l'autre face d'extrémité (261). La pièce d'appui (130) est réalisée sous forme d'une bague indépendante disposée à l'intérieur du manchon (13). Bien entendu, la pièce d'appui (130) pourrait être aussi disposée extérieurement audit manchon.

Pour tout ce qui n'est pas décrit, l'homme de métier se reportera aux dessins annexés.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Roue libre pour cycle comprenant un empilage de plusieurs pignons (8a, 8b, 8c, 8d, 8e, 8f, 8g, 8h) séparés les uns des autres par des entretoises (9a, 9b, 9c, 9d, 9e, 9f, 9g), ledit empilage étant maintenu sur le manchon (13) d'un corps de roue libre (10) entre un élément d'appui (11) et un élément de retenue (12), caractérisée en ce que ledit élément de retenue (12) est en butée contre un appui (26, 260, 261) disposé sur une pièce d'appui (13, 130) pour déterminer entre ledit élément d'appui (11) et l'élément de retenue (12), une distance (D) déterminée, tandis que chaque entretoise (9a, 9b, 9c, 9d, 9e, 9f, 9g) est une rondelle déformable élastiquement dans son épaisseur.

2. Roue libre pour cycle selon la revendication 1, caractérisée en ce que chaque entretoise (9a, 9b, 9c, 9d, 9e, 9f, 9g) est une rondelle réalisée en matériau plastique.

3. Roue libre pour cycle selon la revendication 1 ou 2, caractérisée en ce que les deux faces diamétrales (30, 31) de la rondelle comprennent chacune une succession de profils en saillie (32), la succession des saillies (32a, 32b, 32c, 32d, 32e, 32f, 32g, 32h) de la première face (30) étant décalée par rapport à la succession des saillies (32i, 32j, 32k, 32l, 32m, 32n, 320, 32p) de la deuxième face.

4. Roue libre pour cycle selon l'une quelconque des revendications précédentes, caractérisée en ce que la pièce d'appui (13, 130) comprend une paroi cylindrique (14, 140).

5. Roue libre pour cycle selon la revendication 4, caractérisée en ce que la pièce d'appui est constituée par le manchon (13).

6. Roue libre pour cycle selon la revendication 5, caractérisée en ce que l'élément de retenue (12) est une douille externe vissée à l'intérieur du manchon (13).

7. Roue libre pour cycle selon la revendication 6, caractérisée en ce que la douille externe (13) comprend une paroi diamétrale (23) dont la face d'appui (25) est en butée contre un appui (26) constitué par la face transversale d'extrémité (26) dudit manchon (13).

8. Roue libre pour cycle selon la revendication 6, caractérisée en ce que la douille externe (13) est en butée sur un rebord d'appui interne (260) dudit manchon (13).

9. Roue libre pour cycle selon l'une quelconque des revendications 1 à 4, caractérisée en ce que la pièce d'appui est une pièce indépendante (130).

10. Roue libre pour cycle selon la revendication 9, caractérisée en ce que l'élément de retenue (12) est en butée contre la face d'extrémité (261) de la pièce indépendante (130) d'appui.

11. Roue libre pour cycle selon l'une quelconque des revendications précédentes, caractérisée en ce que l'élément d'appui (11) est solidaire du manchon (13) et fait partie intégrante de celui-ci.

12. Roue libre pour cycle selon l'une quelconque des revendications 1 à 10, caractérisée en ce que l'élément d'appui (11) est une douille externe vissée à l'intérieur du manchon (13).

13. Roue libre pour cycle selon la revendication 11, caractérisée en ce que la distance (D) entre ledit élément d'appui (11) et ledit élément de retenue (12) est définie par la longueur (L) entre deux appuis (22-26, 220-260, 221-261) d'une pièce d'appui (13, 130).

14. Roue libre pour cycle selon la revendication 13, caractérisée en ce que l'élément d'appui (11) est en butée contre un appui (22, 220) disposé sur ledit manchon (13).

15. Roue libre pour cycle selon la revendication 13, caractérisée en ce que l'élément d'appui (11) est en butée sur un appui (221) de la pièce indépendante d'appui (130).
